# EUROPEAN PATENT SPECIFICATION

(11) **EP 4 375 613 B1**
(45) Date of publication and mention of the grant of the patent: **13.08.2025**
(21) Application number: 23210014.9
(22) Date of filing: 15.11.2023
(51) Int. Cl.: G01B 11/25, B65G 43/08, G06V 10/44, G06V 10/764, G06V 20/52, G06V 20/64, G06Q 10/0832

(54) **SYSTEM FOR RECOGNISING UNSTABLE OBJECTS**
SYSTEM ZUR ERKENNUNG INSTABILER OBJEKTE
SYSTÈME DE RECONNAISSANCE D'OBJETS INSTABLES

(30) Priority: 25.11.2022 IT 202200024303
(43) Date of publication of application: 29.05.2024
(73) Proprietor: Fives Intralogistics S.p.A., 21015 Lonate Pozzolo (VA) (IT)
(72) Inventor: GARETTI, Filippo, 29121 Piacenza (IT)
(74) Representative: Novagraaf Group

(56) References cited:
- CN-A- 106 839 975
- US-A- 5 280 170
- US-A1- 2010 191 367
- US-A1- 2013 229 670

## Description

This invention relates to a system for recognising unstable objects moved by a conveyor.

In detail, the invention relates to a system for recognising unstable objects transported on a sorting device.

In the sector of postal deliveries, transport and logistics, the systems for sorting objects that need to be moved from a starting point to a destination are particularly important.

Such systems comprise a main conveying line which receives the mass of objects to be sorted and suitably distributes them to various secondary lines, which in turn transport them to the distribution stations to which the individual objects are intended.

The objects are carried resting on conveyor belts or rollers, which may be positioned in succession to form a circuit which defines the above-mentioned main line from which secondary lines branch.

The success of e-commerce has led to a considerable increase in the number of unstable objects that the sorting devices must handle.

Indeed, express courier delivery is now used to deliver a very wide range of products to a purchaser, from a wallet to an electrical household appliance, which means that the use of standardisation criteria in the production and use of sorting devices is ineffective.

The expression "unstable objects" in this context means objects which could tip over during transport on the sorting device and obstruct the operations for sorting them or other adjacent objects or which could even fall outside the conveyor. For example, an oblong object positioned in a perpendicular manner on the conveyor belt is in an unstable state, because the supporting base is relatively narrow relative to the space occupied in space and the barycentre is not located close to the base. In the same way, an object with a generically convex shape is not very stable because its surface of contact with the conveyor is reduced.

The correct management of the unstable objects requires, firstly, their recognition, that is to say, their identification with respect to the general nature of the sorted objects.

Currently, the recognition of unstable objects is performed by determining the shape of the objects and trying to determine the position of the respective barycentre. For this purpose, the sorting devices are provided with scanners which check the shape of the objects transported and with scales to determine the weight.

US 2010/0191367 A1 discloses a system comprising cameras for capturing images of transported items and a processor for determining their dimensional stability based on the captured images.

The prior art recognition systems are useful, but their effectiveness has been shown to be only partial and does not allow the managers of the sorting systems to significantly reduce the use of personnel responsible for a human and non-automatic recognition of unstable objects.

The technical purpose which forms the basis of the invention is to propose a system for recognising unstable objects which is able to overcome the above-mentioned drawbacks of the prior art.

The technical purpose is achieved by the system made according to the accompanying claims.

Further features and advantages of this invention are more apparent in the non-limiting description of a preferred but non-exclusive embodiment of a recognition system, as illustrated in the accompanying drawings, in which:
- Figure 1 is an axonometric view of a sorting system in which the system according to the invention may be installed;
- Figure 2 is a schematic side view of a conveyor associated with means for detecting the shape of the base of the objects transported, included in the system according to the invention;

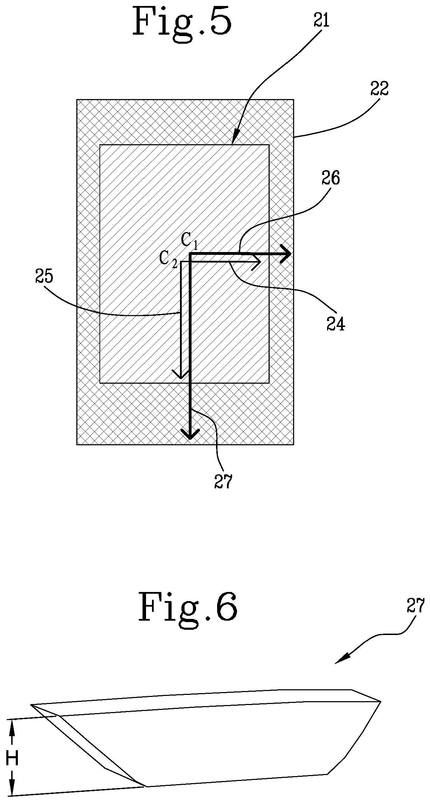

- Figures 3 to 5 are schematic views of a processing of the shapes of the object detected and of its base;
- Figure 6 is a schematic view of a processing of the object; and

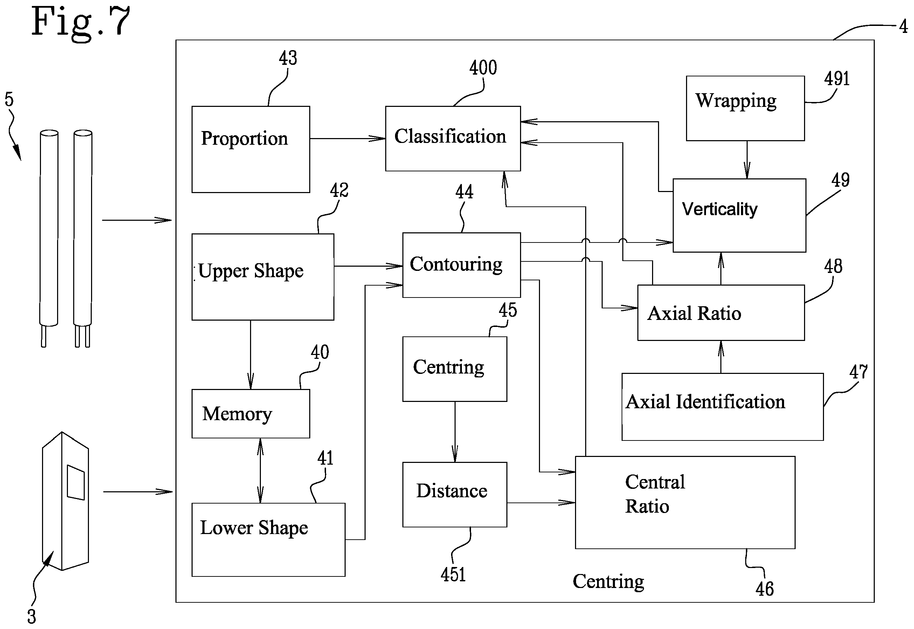

- Figure 7 is a diagram of the processing unit.

With reference to the above-mentioned drawings, the numeral 1 denotes a sorting system comprising a system for recognising unstable objects made according to the invention.

It should be noted that the proposed system has been designed to recognise unstable objects transported resting on a generic conveyor 10, regardless of the type of system in which it is located.

However, hereinafter, for simplicity of description, reference will be made to the particular case in which the recognition system is used in a sorting device 1, which may also be like those described in the introduction during the discussion on the prior art.

Said conveyor 10 may include a plurality of transport modules 11 on which the objects 2 to be sorted travel, which are positioned in succession to define a path, which may, for example, be in the shape of a loop or have another configuration.

The transport modules may each comprise a motor-driven belt 11, closed in a loop and slidable between two linkage devices or a series of motor-driven rollers.

Reference will be made below to the particular case wherein each module 11 is defined by a motor-driven conveyor belt.

Each of the objects 2 transported is carried resting on the belts 11 and therefore has a supporting base 20 which defines at the bottom a supporting surface, which is the surface in contact with the upper surface of the belt 110.

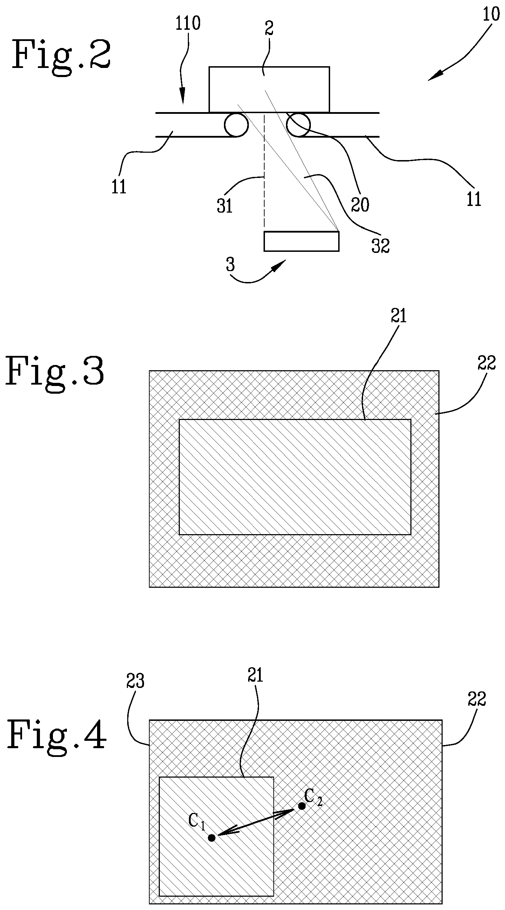

According to an important aspect of the invention, the recognition system comprises means 3 for recognising the base configured for detecting at least one shape, in particular at least one outline, of the base 20 for supporting the objects 2 transported on the conveyor 10. The means 3 for recognising the base are schematically illustrated in Figure 2.

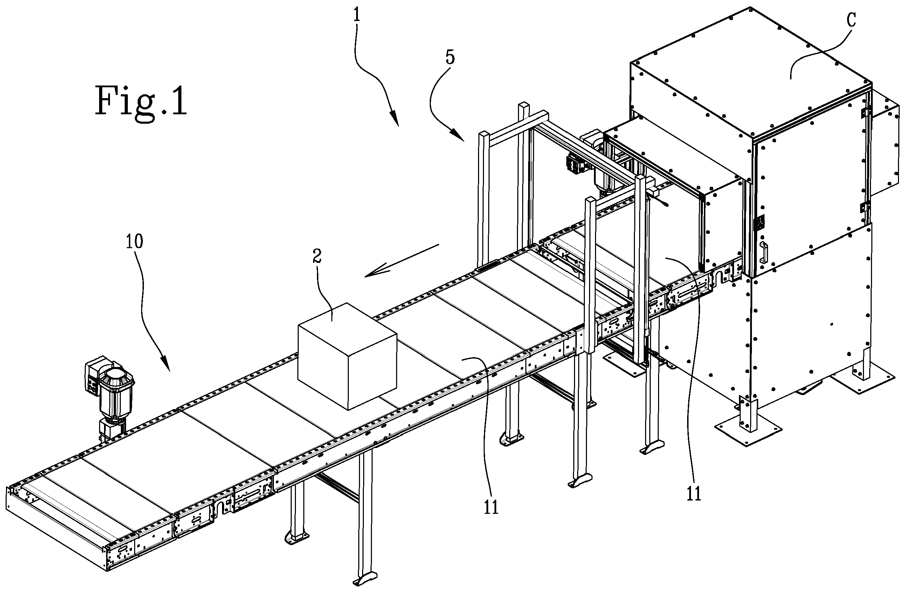

In the example of Figure 1, the means 3 for recognising the base are contained in the housing C.

In practice, by using the above-mentioned means 3 for recognising the base, the invention is able to acquire the two-dimensional shape of the base surface, that is to say, of the above-mentioned base 20 of each object 2 detected.

By processing this acquisition, the proposed system is able to establish whether the object 2 detected has a base suitable for allowing a sufficient stability, during transport on the conveyor 10.

It is also possible that the means for recognising the base are also suitable for determining the three-dimensional configuration of the base.

Preferably, the above-mentioned means for recognising the base comprise one or more scanning devices 3 which may be of the laser type, for example a laser profile sensor, such as those of the Wenglor brand or other similar products.

According to a particular embodiment of the invention, a separating space is defined between one module 11 and the other of the conveyor 10, for example between two belts 11. In this case, the means 3 for recognising the base can be positioned below the conveyor 10 and facing towards the separating space between two modules 11, so as to detect the shape of the base of the objects 2 transported whilst they pass from one module 11 to another (see Figure 2).

More in detail, Figure 2 shows the example case wherein the detection means comprise a profile sensor 3 and it indicates both the direction of the laser beam 31 and the visual angle 32 of the sensor 3 receiver.

According to a possible operation of the means for recognising the base, a scanning of the base of the object is performed with a predetermined depth in height and what is detected in that vertical range is acquired and is considered as the base of the object, whilst what is above the depth limit of the scanning is not acquired and is therefore not considered as the bottom or base of the object.

According to a preferred embodiment of the invention, the system also comprises upper acquisition means 5 set up for detecting parameters relative to a shape of the entire transported object.

According to the example of Figure 1, the upper acquisition means 5 are positioned downstream of the above-mentioned housing C.

More in detail, the upper acquisition means 5 are set up for acquiring at least the shape seen from above or from below of the object detected.

More specifically, the upper acquisition means may include photocell barriers 5 such as those shown in Figure 1 or laser systems or other devices suitable for the purpose.

Moreover, the upper acquisition means may also be designed to detect a height, a thickness and a length of each object 2.

Preferably, the system according to the invention comprises a processing unit 4 connected to the means 3 for recognising the base and to the upper acquisition means 5 and comprising a lower shape module 41 configured to define at least a flat base surface which represents the base detected by the means 3 for recognising the base. More in detail, the processing may be obtained by providing to the processing unit 4 geometrical parameters of the sorting system 1, such as the distance between the upper surface 110 of the conveyor 10, for example of the belt 11 and the means 3 for recognising the base. The information may, for example, be recorded in a memory module 40 present in the processing unit 4.

In practice, the above-mentioned flat base surface is a two-dimensional representation of the base of the object detected. For example, if the base comes into contact with the belt on a rectangular surface which centrally has a recess, that is to say, a concavity with a rectangular perimeter, then the flat surface will be a rectangular loop.

Generally speaking, it should be noted that, in the present description, the processing unit 4 is presented as being subdivided into separate functional modules solely for the purpose of describing the functions clearly and completely.

In practice, the processing unit 4 may be constituted by a single electronic device, also of the type commonly present on this type of system, suitably programmed to perform the functions described; the various modules can correspond to hardware units and/or software routines forming part of the programmed device.

Alternatively or in addition, the functions can be performed by a plurality of electronic devices on which the above-mentioned functional modules can be distributed.

Generally speaking, the processing unit 4 may have one or more microprocessors or microcontrollers for execution of the instructions contained in the memory modules and the above-mentioned functional modules may also be distributed on a plurality of local or remote calculators based on the architecture of the network in which they reside.

Preferably, the processing unit 4 comprises an upper shape module 42 configured for defining an overall flat surface which represents the outline, seen from below or from above, of the entire object detected by the upper acquisition means.

In practice, the flat overall surface is a two-dimensional surface which constitutes a representation on the horizontal plane of the outline of the object seen from below or above.

Further, the processing unit 4 may be configured for obtaining shape parameters starting from the flat base and overall surfaces and may comprise a classification module 400 configured for determining whether an object detected is stable or unstable as a function of the fact that one or more of the respective shape parameters is greater than or less than a relative predetermined discrimination threshold.

Specific examples of shape parameters are described below according to this description and of the modules of the processing unit 4 designed for obtaining them.

The processing unit 4 may include a proportion module 43 configured for calculating a first shape parameter relative to a ratio between the area of the flat base surface and that of the overall flat surface. More in detail, the proportion module 43 can, for example, calculate a percentage ratio between the two above-mentioned surface areas. Still more in detail, the first shape parameter is preferably the percentage value of the area of the flat base surface relative to the area of the overall flat surface.

Moreover, preferably, the processing unit 4 comprises a contouring module 44 configured for defining a minimum circumscribed rectangle of the flat base surface 21 and a minimum circumscribed rectangle of the overall surface 22 (se Figure 3).

The processing unit 4 may further comprise a centring module 45 configured for determining a geometrical centre C1 of said minimum circumscribed rectangle of the flat base surface 21 and a geometrical centre C2 of said minimum circumscribed rectangle 22 of the overall flat surface. In this case, the processing unit 4 may also include a distance module 451 configured for calculating a distance between the above-mentioned centres C1, C2.

Moreover, the processing unit comprises a central ratio module 46 configured for determining a length of the shortest side 23 of said minimum circumscribed rectangle of the overall surface 22 and for calculating a second shape parameter relative to a ratio between said distance between the centres determined by the centring module and said length of the shortest side 23.

The processing unit may also comprise an axial identification module 47 for identifying, in each of said minimum circumscribed rectangles, two axes 24, 25, 26, 27 respectively parallel to the respective length and to the relative width, which extend from the respective centre C1, C2 and terminate at the respective perimeter.

The processing unit may therefore include an axial ratio module 48 configured for calculating a third and a fourth shape parameter relative to ratios between the lengths of each of the above-mentioned axes 24, 25, 26, 27 of the minimum circumscribed rectangle of the flat base surface 21 with the length of the axis angularly closest to the minimum circumscribed rectangle of the overall flat surface 22.

The processing unit may further include a verticality module 49 configured for calculating a fifth shape parameter relative to a ratio between a height H of the entire object detected and a shortest side of the minimum circumscribed rectangle of the flat base surface 21.

More specifically, the processing unit may also include a wrapping module 491 to determine the minimum circumscribed prism 27 of the object detected. In this case, the height of the entire object measured by the vertical module may be a height H of said minimum circumscribed prism 27.

According to a preferred embodiment of the invention, the above-mentioned classification module is configured for classifying an object detected as unstable if at least one of the following conditions is verified:
- the first shape parameter, corresponding to a percentage value of the area of the flat base surface with respect to the area of the overall flat surface, is less than or equal to a first discrimination threshold;
- the second shape parameter, corresponding to a ratio between the distance between the two centres determined by the centring module and the length of the shortest side of the minimum circumscribed rectangle of the overall surface 22, is less than or equal to a second discrimination threshold;
- the third and fourth axial parameters, corresponding to ratios between the lengths of each of the above-mentioned axes of the minimum circumscribed rectangle of the flat base surface 21 with the length of the axis angularly closest to the minimum circumscribed rectangle of the overall flat surface, are less than or equal, respectively, to a third and a fourth discrimination threshold;
- the fifth shape parameter, corresponding to a ratio between a height of the entire object detected and the shortest side of the minimum circumscribed rectangle of the flat base surface 21, is greater than or equal to a fifth discrimination threshold.

For example, the first discrimination threshold may be equal to 20%, the second discrimination threshold may be equal to 40%, the third and fourth discrimination thresholds may be equal to 80% and the fifth discrimination threshold may be equal to 120%.

In practice, the shape of each of the objects moved in the sorting device which is provided with the recognition system according to the invention is acquired by the detection means and by it the processing unit obtains a plurality of parameters to be compared with respective predetermined thresholds, so as to obtain an automatic classification of the objects as "stable" and "unstable".

## Claims

1. A system for recognising unstable objects transported resting on a conveyor (10), comprising:
means for detecting the bottom (3) designed for detecting a shape of a bottom of an object (2) transported;
upper acquisition means (5) set up for acquiring at least an outline seen from above or from below of the entire transported object; and a processing unit (4) connected to said means for detecting the bottom (3) and connected to said upper acquisition means (5) and comprising:
a lower shape module (41) configured for defining one or more flat base surfaces representing the bottom of the object detected by the upper acquisition means;
an upper shape module (42) configured for defining an overall flat surface which represents the outline, seen from below or from above, of the entire object detected by the upper acquisition means; the system being **characterized in that** the processing unit (4) is configured for obtaining shape parameters starting at least from the flat base surface and the overall flat surface and further comprises a classification module (400) configured for determining whether an object detected is stable or unstable as a function of the fact that one or more of the respective shape parameters is greater than or less than a relative predetermined discrimination threshold.

2. The system according to the preceding claim, wherein said conveyor (10) includes two transport modules (11) on which the object (2) is moved and between which is defined a separating space (S), said detection means (3) being positioned beneath the conveyor (10) and facing towards the separating space (S) so as to detect the three-dimensional configuration of the supporting surface (200) of the object (2) transported whilst it passes from one module (11) to the other.

3. The system according to the preceding claim, wherein one or more modules comprise a motor-driven belt (11) closed in a loop.

4. The system according to claim 2, wherein one or more modules comprise a series of motor-driven rollers.

5. The system according to claim 1, wherein the processing unit (4) comprises a proportion module (43) configured for calculating a first shape parameter relative to a ratio between the area of the flat base surface and that of the overall flat surface.

6. The system according to any one of the preceding claims, wherein the processing unit (4) comprises a contouring module (44) configured for defining a minimum circumscribed rectangle of the flat base surface (21) and a minimum circumscribed rectangle of the overall surface (22).

7. The system according to the preceding claim, wherein the processing unit (4) comprises a centring module (45) configured for determining a geometrical centre (C1) of said minimum circumscribed rectangle of the flat base surface (21) and a geometrical centre (C2) of said minimum circumscribed rectangle of the overall flat surface.

8. The system according to the preceding claim, wherein the processing unit (4) includes a distance module (451) configured for calculating a distance between the above-mentioned centres (C1, C2).

9. The system according to the preceding claim, wherein the processing unit comprises a central ratio module (46) configured for determining a length of the shortest side of said minimum circumscribed rectangle of the overall surface (22) and for calculating a second shape parameter relative to a ratio between said distance between the centres determined by the centring module and said length of the shortest side.

10. The system according to any one of claims 6 to 9, wherein the processing unit comprises an axial identification module (47) for identifying, in each of said minimum circumscribed rectangles (21, 22), two axes (24, 25, 26, 27) respectively parallel to the respective length and to the relative width, which extend from the respective centre (C1, C2) and terminate at the respective perimeter.

11. The system according to the preceding claim, wherein the processing unit includes an axial ratio module (48) configured for calculating a third and a fourth shape parameter relative to ratios between the lengths of each of the above-mentioned axes of the minimum circumscribed rectangle of the flat base surface (21) with the length of the axis angularly closest to the minimum circumscribed rectangle of the overall flat surface (22).

12. The system according to any one of claims 6 to 11, wherein the processing unit includes a verticality module (49) configured for calculating a fifth shape parameter relative to a ratio between a height of the entire object detected and a shortest side of the minimum circumscribed rectangle of the flat base surface (21).

13. The system according to claims 5, 9 and 11, wherein the above-mentioned classification module is configured for classifying an object detected as unstable if one or more of the following conditions are verified:
- the first shape parameter, corresponding to a percentage value of the area of the flat base surface with respect to the area of the overall flat surface, is less than or equal to a first discrimination threshold;
- the second shape parameter, corresponding to a ratio between the distance between the two centres determined by the centring module and the length of the shortest side of the minimum circumscribed rectangle of the overall surface (22), is less than or equal to a second discrimination threshold;
- the third and fourth axial parameters, corresponding to ratios between the lengths of each of the above-mentioned axes of the minimum circumscribed rectangle of the flat base surface (21) with the length of the axis angularly closest to the minimum circumscribed rectangle of the overall flat surface, are less than or equal, respectively, to a third and a fourth discrimination threshold;

14. The system according to the preceding claim and claim 12, wherein the classification module is configured for classifying an object detected as unstable if there is also the condition that the fifth shape parameter, corresponding to a ratio between a height of the entire object detected and the shortest side of the minimum circumscribed rectangle of the flat base surface (21), is greater than or equal to a fifth discrimination threshold.

## Patentansprüche

1. System zum Erkennen instabiler, auf einem Förderband (10) ruhend transportierter Objekte, das Folgendes umfasst:
Mittel zum Erfassen der Unterseite (3), das dazu ausgelegt ist, die Form einer Unterseite eines transportierten Objekts (2) zu erkennen;
obere Erfassungsmittel (5), die zum Erfassen zumindest eines von oben oder von unten gesehenen Umrisses des gesamten transportierten Objekts eingerichtet sind; und eine Verarbeitungseinheit (4), die mit den Mitteln zum Erfassen der Unterseite (3) und mit den oberen Erfassungsmitteln (5) verbunden ist und Folgendes umfasst:
ein unteres Formmodul (41), das zum Definieren einer oder mehrerer flacher Grundflächen konfiguriert ist, die die Unterseite des von den oberen Erfassungsmitteln erfassten Objekts darstellen;
ein oberes Formmodul (42), das zum Definieren einer gesamten flachen Oberfläche konfiguriert ist, die den Umriss des gesamten von der oberen Erfassungseinrichtung erfassten Objekts von unten oder von oben gesehen darstellt; wobei das System **dadurch gekennzeichnet ist, dass** die Verarbeitungseinheit (4) konfiguriert ist, um Formparameter ausgehend von zumindest der flachen Grundfläche und der gesamten flachen Oberfläche zu erhalten und ferner ein Klassifizierungsmodul (400) umfasst, das konfiguriert ist, um zu bestimmen, ob ein erkanntes Objekt stabil oder instabil ist, und zwar in Abhängigkeit von der Tatsache, dass einer oder mehrere der jeweiligen Formparameter größer oder kleiner als ein relativer vorbestimmter Unterscheidungsschwellenwert sind.

2. System nach dem vorstehenden Anspruch, wobei das Förderband (10) zwei Transportmodule (11) einschließt, auf denen das Objekt (2) bewegt wird und zwischen denen ein Trennraum (S) definiert ist, wobei die Erkennungseinrichtung (3) unter dem Förderband (10) positioniert ist und in Richtung des Trennraums (S) zeigt, um die dreidimensionale Konfiguration der Auflagefläche (200) des transportierten Objekts (2) zu erkennen, während es von einem Modul (11) zum anderen gelangt.

3. System nach dem vorstehenden Anspruch, wobei ein oder mehrere Module einen motorgetriebenen Riemen (11) umfassen, der in einer Schleife geschlossen ist.

4. System nach Anspruch 2, wobei ein oder mehrere Module eine Reihe motorbetriebener Rollen umfassen.

5. System nach Anspruch 1, wobei die Verarbeitungseinheit (4) ein Proportionsmodul (43) umfasst, das zum Berechnen eines ersten Formparameters relativ zu einem Verhältnis zwischen der Fläche der flachen Grundfläche und der Fläche der gesamten flachen Oberfläche konfiguriert ist.

6. System nach einem der vorstehenden Ansprüche, wobei die Verarbeitungseinheit (4) ein Konturierungsmodul (44) umfasst, das zum Definieren eines minimalen umschriebenen Rechtecks der flachen Grundfläche (21) und eines minimalen umschriebenen Rechtecks der gesamten Oberfläche (22) konfiguriert ist.

7. System nach dem vorstehenden Anspruch, wobei die Verarbeitungseinheit (4) ein Zentriermodul (45) umfasst, das zum Bestimmen eines geometrischen Zentrums (C1) des minimalen umschriebenen Rechtecks der flachen Grundfläche (21) und eines geometrischen Zentrums (C2) des minimalen umschriebenen Rechtecks der gesamten flachen Oberfläche konfiguriert ist.

8. System nach dem vorstehenden Anspruch, wobei die Verarbeitungseinheit (4) ein Distanzmodul (451) einschließt, das zum Berechnen einer Distanz zwischen den oben genannten Zentren (C1, C2) konfiguriert ist.

9. System nach dem vorstehenden Anspruch, wobei die Verarbeitungseinheit ein Zentrumsverhältnismodul (46) umfasst, das zum Bestimmen einer Länge der kürzesten Seite des minimal umschriebenen Rechtecks der gesamten Oberfläche (22) und zum Berechnen eines zweiten Formparameters relativ zu einem Verhältnis zwischen der Distanz zwischen den durch das Zentriermodul bestimmten Zentren und der Länge der kürzesten Seite konfiguriert ist.

10. System nach einem der Ansprüche 6 bis 9, wobei die Verarbeitungseinheit ein Achsenidentifizierungsmodul (47) umfasst, um in jedem der minimal umschriebenen Rechtecke (21, 22) zwei Achsen (24, 25, 26, 27) zu identifizieren, die jeweils parallel zur jeweiligen Länge und zur relativen Breite sind, sich vom jeweiligen Zentrum (C1, C2) erstrecken und am jeweiligen Umfang enden.

11. System nach dem vorstehenden Anspruch, wobei die Verarbeitungseinheit ein Achsenverhältnismodul (48) einschließt, das zum Berechnen eines dritten und eines vierten Formparameters in Bezug auf die Verhältnisse zwischen den Längen jeder der oben genannten Achsen des minimalen umschriebenen Rechtecks der flachen Grundfläche (21) mit der Länge der Achse konfiguriert ist, die dem minimalen umschriebenen Rechteck der gesamten flachen Oberfläche (22) winkelmäßig am nächsten liegt.

12. System nach einem der Ansprüche 6 bis 11, wobei die Verarbeitungseinheit ein Vertikalitätsmodul (49) einschließt, das zum Berechnen eines fünften Formparameters relativ zu einem Verhältnis zwischen einer Höhe des gesamten erkannten Objekts und einer kürzesten Seite des minimal umschriebenen Rechtecks der flachen Grundfläche (21) konfiguriert ist.

13. System nach den Ansprüchen 5, 9 und 11, wobei das oben erwähnte Klassifizierungsmodul so konfiguriert ist, dass es ein als instabil erkanntes Objekt klassifiziert, wenn eine oder mehrere der folgenden Bedingungen erfüllt sind:
- der erste Formparameter, der einem Prozentwert der Fläche der flachen Grundfläche im Verhältnis zur Fläche der gesamten flachen Oberfläche entspricht, ist kleiner oder gleich einem ersten Unterscheidungsschwellenwert;
- der zweite Formparameter, der einem Verhältnis zwischen der Distanz zwischen den beiden vom Zentriermodul ermittelten Zentren und der Länge der kürzesten Seite des minimal umschriebenen Rechtecks der gesamten Oberfläche (22) entspricht, ist kleiner oder gleich einem zweiten Unterscheidungsschwellenwert;
- der dritte und der vierte Achsenparameter, die den Verhältnissen zwischen den Längen jeder der oben genannten Achsen des minimalen umschriebenen Rechtecks der flachen Grundfläche (21) und der Länge der Achse entsprechen, die dem minimalen umschriebenen Rechteck der gesamten flachen Oberfläche im Winkel am nächsten liegt, sind kleiner oder gleich einem dritten und vierten Unterscheidungsschwellenwert;

14. System nach dem vorstehenden Anspruch und Anspruch 12, wobei das Klassifizierungsmodul zum Klassifizieren eines als instabil erkannten Objekts konfiguriert ist, wenn außerdem die Bedingung vorliegt, dass der fünfte Formparameter, der einem Verhältnis zwischen einer Höhe des gesamten erkannten Objekts und der kürzesten Seite des minimal umschriebenen Rechtecks der flachen Grundfläche (21) entspricht, größer oder gleich einem fünften Unterscheidungsschwellenwert ist.

## Revendications

1. Système de reconnaissance d'objets instables transportés reposant sur un convoyeur (10), comprenant :
des moyens de détection du fond (3) destinés à détecter une forme d'un fond d'un objet (2) transporté ;
des moyens d'acquisition supérieurs (5) prévus pour acquérir au moins un contour vu de dessus ou de dessous de l'ensemble de l'objet transporté ; et
une unité de traitement (4) raccordée auxdits moyens de détection du fond (3) et connectée auxdits moyens d'acquisition supérieurs (5) et comprenant :
un module de forme inférieur (41) configuré pour définir une ou plusieurs surfaces planes de base représentant le fond de l'objet détecté par le moyen d'acquisition supérieur ;
un module de forme supérieur (42) configuré pour définir une surface plane globale qui représente le contour, vu de dessous ou de dessus, de l'ensemble de l'objet détecté par les moyens d'acquisition supérieurs ; le système étant **caractérisé en ce que** l'unité de traitement (4) est configurée pour obtenir des paramètres de forme à partir au moins de la surface plane de base et de la surface plane globale et comprend en outre un module de classification (400) configuré pour déterminer si un objet détecté est stable ou instable en fonction du fait qu'un ou plusieurs des paramètres de forme respectifs sont supérieurs ou inférieurs à un seuil de discrimination relatif prédéterminé.

2. Système selon la revendication précédente, dans lequel ledit convoyeur (10) comporte deux modules de transport (11) sur lesquels l'objet (2) est déplacé et entre lesquels est défini un espace de séparation (S), ledit moyen de détection (3) étant positionné sous le convoyeur (10) et orienté vers l'espace de séparation (S) de manière à détecter la configuration tridimensionnelle de la surface d'appui (200) de l'objet (2) transporté lors de son passage d'un module (11) à l'autre.

3. Système selon la revendication précédente, dans lequel un ou plusieurs modules comprennent une courroie motorisée (11) fermée en boucle.

4. Système selon la revendication 2, dans lequel un ou plusieurs modules comprennent une série de rouleaux motorisés.

5. Système selon la revendication 1, dans lequel l'unité de traitement (4) comprend un module de proportion (43) configuré pour calculer un premier paramètre de forme relatif à un rapport entre l'aire de la surface plane de base et celle de la surface plane globale.

6. Système selon l'une quelconque des revendications précédentes, dans lequel l'unité de traitement (4) comprend un module de contournage (44) configuré pour définir un rectangle circonscrit minimal de la surface plane de base (21) et un rectangle circonscrit minimal de la surface globale (22).

7. Système selon la revendication précédente, dans lequel l'unité de traitement (4) comprend un module de centrage (45) configuré pour déterminer un centre géométrique (C1) dudit rectangle minimum circonscrit de la surface plane de base (21) et un centre géométrique (C2) dudit rectangle minimum circonscrit de la surface plane globale.

8. Système selon la revendication précédente, dans lequel l'unité de traitement (4) comporte un module de distance (451) configuré pour calculer une distance entre les centres susmentionnés (C1, C2).

9. Système selon la revendication précédente, dans lequel l'unité de traitement comprend un module de rapport central (46) configuré pour déterminer une longueur du côté le plus court dudit rectangle circonscrit minimum de la surface globale (22) et pour calculer un second paramètre de forme relatif à un rapport entre ladite distance entre les centres déterminée par le module de centrage et ladite longueur du côté le plus court.

10. Système selon l'une quelconque des revendications 6 à 9, dans lequel l'unité de traitement comprend un module d'identification axiale (47) pour identifier, dans chacun desdits rectangles circonscrits minimaux (21, 22), deux axes (24, 25, 26, 27) respectivement parallèles à la longueur respective et à la largeur relative, qui s'étendent à partir du centre respectif (C1, C2) et se terminent au périmètre respectif.

11. Système selon la revendication précédente, dans lequel l'unité de traitement comprend un module de rapport axial (48) configuré pour calculer un troisième et un quatrième paramètre de forme relatif aux rapports entre les longueurs de chacun des axes susmentionnés du rectangle circonscrit minimum de la surface plane de base (21) avec la longueur de l'axe angulairement le plus proche du rectangle circonscrit minimum de la surface plane globale (22).

12. Système selon l'une quelconque des revendications 6 à 11, dans lequel l'unité de traitement comporte un module de verticalité (49) configuré pour calculer un cinquième paramètre de forme relatif à un rapport entre une hauteur de l'objet entier détecté et un côté le plus court du rectangle circonscrit minimum de la surface plane de base (21).

13. Système selon les revendications 5, 9 et 11, dans lequel le module de classification susmentionné est configuré pour classer un objet détecté comme instable si une ou plusieurs des conditions suivantes sont vérifiées :
- le premier paramètre de forme, correspondant à une valeur en pourcentage de l'aire de la surface plane de base par rapport à l'aire de la surface plane globale, est inférieur ou égal à un premier seuil de discrimination ;
- le second paramètre de forme, correspondant à un rapport entre la distance entre les deux centres déterminés par le module de centrage et la longueur du plus petit côté du rectangle minimum circonscrit à la surface globale (22), est inférieur ou égal à un second seuil de discrimination ;
- les troisième et quatrième paramètres axiaux, correspondant à des rapports entre les longueurs de chacun des axes susmentionnés du rectangle minimum circonscrit de la surface plane de base (21) et la longueur de l'axe angulairement le plus proche du rectangle minimum circonscrit de la surface plane globale, sont inférieurs ou égaux, respectivement, à un troisième et à un quatrième seuil de discrimination ;

14. Système selon la revendication précédente et la revendication 12, dans lequel le module de classification est configuré pour classer un objet détecté comme instable s'il existe également la condition que le cinquième paramètre de forme, correspondant à un rapport entre une hauteur de l'objet entier détecté et le côté le plus court du rectangle circonscrit minimum de la surface plane de base (21), est supérieur ou égal à un cinquième seuil de discrimination.
